# EUROPÄISCHE PATENTANMELDUNG

(11) **EP 3 760 693 A1**
(43) Veröffentlichungstag der Anmeldung: **06.01.2021**
(21) Anmeldenummer: 20183606.1
(22) Anmeldetag: 02.07.2020
(51) Int. Cl.: C10B 53/02, C10B 49/04, C10B 49/06

(54) **VORRICHTUNG ZUM HERSTELLEN VON PFLANZENKOHLE UND/ODER ZUR WÄRMEGEWINNUNG**

(30) Priorität: 03.07.2019 DE 102019117900
(71) Anmelder: Engelhardt, Christian, 96332 Pressig (DE)
(72) Erfinder: Engelhardt, Christian, 96332 Pressig (DE)
(74) Vertreter: Schaumburg und Partner Patentanwälte mbB

(57) **Zusammenfassung**

Eine Vorrichtung (100) zum Herstellen von Pflanzenkohle und/oder zur Wärmegewinnung umfasst eine Reaktoranordnung (110) zum Verkohlen eines Biomassebrennstoffs zu Pflanzenkohle und eine Brennkammer (120) zur Verbrennung zumindest eines Teils des beim Verkohlen freiwerdenden Gases zur Wärmegewinnung. Die Vorrichtung (100) umfasst ferner eine mit Hilfe einer Antriebseinheit (136) antreibbare Fördereinrichtung (130) zum Fördern des Biomassebrennstoffs, wobei die Fördereinrichtung (130) den Biomassebrennstoff von unten in die Reaktoranordnung (110) hineinfördert.

## Beschreibung

Die Erfindung betrifft eine Vorrichtung zum Herstellen von Pflanzenkohle und/oder zur Wärmegewinnung, die eine Reaktoranordnung zum Verkohlen eines Biomassebrennstoffs zu Pflanzenkohle sowie eine Brennkammer zur Verbrennung wenigstens eines Teils der beim Verkohlen freiwerdenden Gase umfasst. Die Vorrichtung umfasst ferner eine mit Hilfe einer Antriebseinheit antreibbare Fördereinrichtung zum Fördern des Biomassebrennstoffs. Eine solche Vorrichtung zur Pflanzenkohleherstellung ist beispielsweise aus dem Dokument DE 20 2014 004 445 U1 bekannt.

Aus dem Dokument EP 2 358 253 A1 ist eine Anlage zur Vergasung von Pflanzenmaterial und zur Herstellung von Pflanzenkohle bekannt, die einen schräg angeordneten Schneckenförderer hat, der Pflanzenmaterial durch einen Reaktorbereich hindurch transportiert. Am Ende des Förderers wird die Pflanzenkohle heraustransportiert. Bei der Verkohlung freiwerdendes Gas entweicht durch eine Auslassöffnung. Die Vorrichtung ist recht aufwändig und störungsanfällig, da die Förderschnecke des Förderers durch den Pyrolysebereich hindurchgeführt wird. Ferner fällt die erzeugte Pflanzenkohle auf einen schrägen Rost, wodurch Probleme bei der Verwendung von unterschiedlich geartetem Pflanzenmaterial auftreten können.

Aufgabe der Erfindung ist es, eine einfach aufgebaute Vorrichtung zum Herstellen von Pflanzenkohle und/oder zur Wärmegewinnung anzugeben.

Diese Aufgabe wird durch eine Vorrichtung zum Herstellen von Pflanzenkohle und/oder zur Wärmegewinnung mit den Merkmalen des Anspruchs 1 gelöst. Vorteilhafte Weiterbildungen sind in den abhängigen Ansprüchen angegeben.

Im Unterschied zu den aus dem Stand der Technik bekannten Vorrichtungen zum Herstellen von Pflanzenkohle und/oder zur Wärmegewinnung erfolgt beim Gegenstand des Anspruchs 1 das Zuführen des Biomassebrennstoffs mit Hilfe der Vorrichtung von unten in die Reaktoranordnung. Hierdurch ist es möglich, auf bewegliche Teile zum Fördern des Biomassebrennstoffs bzw. zum Fördern der verkohlten Kohle in der Reaktoranordnung selbst zu verzichten. Ferner ist es möglich, die Verkohlung der Pflanzenkohle auch mit Hilfe von einfachen Steuermitteln kontinuierlich durchzuführen und das beim Verkohlen freiwerdende Gas zur Wärmegewinnung in der Brennkammer zu verbrennen.

Vorzugsweise hat die Reaktoranordnung einen Pyrolysebereich, in dem das Verkohlen des Biomassebrennstoffs durchgeführt wird. Insbesondere erfolgt eine thermo-chemische Spaltung organischer Verbindungen bei hohen Temperaturen. Hierbei wird in den Pyrolysebereich nur wenig Sauerstoff bzw. Luft als Primärluft zugeführt. Somit erfolgt im Pyrolysebereich eine Verschwelung des Biomassebrennstoffs unter Sauerstoffausschluss bzw. geringer Sauerstoffzufuhr. Mit Hilfe der Vorrichtung nach Anspruch 1 kann insbesondere eine Purothermpyrolyse durchgeführt werden, bei der der Biomassebrennstoff unter Sauerstoffmangel entgast und anschließend das erzeugte Gas verbrannt wird. Die heißen Abgase können dann zur Energiegewinnung, insbesondere zur Warmwasser- und/oder Dampferzeugung, genutzt werden. Beim Entgasen unter Sauerstoffmangel erfolgt beim Einsatz von Biomassebrennstoffen eine Verkohlung, so dass zusätzlich zum erzeugten Gas auch Pflanzenkohle erzeugt wird, die insbesondere aufgrund der nicht vollständigen Verbrennung als CO₂-Speicher dient und aufgrund ihrer enthaltenen Reststoffe auch als Bodenhilfsstoff, Nährstoffspeicher und/oder Baustoff eingesetzt werden kann.

Durch das Fördern des Biomassebrennstoffs von unten in die Reaktoranordnung hinein erfolgt eine einfache, gleichmäßige Verkohlung des Biomassebrennstoffs. Die erzeugte Pflanzenkohle wird automatisch oben aus der Reaktoranordnung herausgedrückt, wenn die Fördereinrichtung weiteren Biomassebrennstoff von unten in die Reaktoranordnung hineinfördert. Bei einem einfachen Aufbau kann so hochwertige Pflanzenkohle erzeugt und gleichzeitig in der Brennkammer verbrennbares Gas erzeugt werden. Durch die Anordnung einer nach unten in Richtung der Reaktoranordnung offenen Brennkammer wird die Reaktoranordnung und vor allem die bereits pyrolysierte Kohle der hohen Temperatur der Flammen des verbrennenden Gases ausgesetzt. Dadurch wird die Kohle nachvergast und zu Pflanzenkohle mit sehr hohem Kohlenstoffanteil (vorzugsweise im Bereich von 80 % bis 95 %, insbesondere 90 %) veredelt. Die Vorrichtung kann mittels Heißluftgebläse oder einem Glühkolben gestartet werden.

Es ist vorteilhaft, wenn die Fördereinrichtung den Biomassebrennstoff senkrecht von unten in die Reaktoranordnung hineinfördert. Hierdurch ist eine gleichmäßige Zufuhr des Biomassebrennstoffs möglich. Ferner werden aufgrund nicht notwendiger Umlenkungen des Biomassebrennstoffs Verpressungen und eine Verstopfung des Biomassebrennstoffs im Zuführbereich der Vorrichtung sicher vermieden.

Ferner ist es vorteilhaft, wenn die bei der Verkohlung in der Reaktoranordnung erzeugte Pflanzenkohle beim Hineinfördern von weiterem Biomassebrennstoff von unten in die Reaktoranordnung aus einer oberen Öffnung der Reaktoranordnung austritt und hierbei kann die aus der oberen Öffnung austretende Pflanzenkohle einen Schüttkegel bilden. Dadurch kann die erzeugte Pflanzenkohle vom Schüttkegel insbesondere seitlich an der Reaktoranordnung vorbei nach unten in einen Sammelbehälter fallen. Hierbei ist es vorteilhaft, wenn die erzeugte Pflanzenkohle an allen Seiten der Reaktoranordnung vom Schüttkegel an der Reaktoranordnung nach unten in einen Sammelbehälter fallen kann. Dadurch ist eine gleichmäßige Abfuhr der erzeugten Pflanzenkohle aus der Reaktoranordnung und das Sammeln der Pflanzenkohle im Sammelbehälter möglich.

Ferner ist es vorteilhaft, wenn die Reaktoranordnung und die Brennkammer derart ausgebildet und zueinander angeordnet sind, dass durch die Verbrennung des Gases in der Brennkammer die aus der Reaktoranordnung austretende Pflanzenkohle und/oder in der Pflanzenkohle noch enthaltener Biomassebrennstoff an der Oberfläche des Schüttkegels erwärmt wird. Insbesondere wird die aus der Reaktoranordnung austretende Pflanzenkohle und/oder in der Pflanzenkohle noch enthaltener Biomassebrennstoff nachvergast. Auch die bereits pyrolisierte Pflanzenkohle kann hierdurch nachvergast werden. Die beim Nachvergasen austretenden Pyrolysegase werden in der Brennkammer verbrannt.

Weiterhin können die bei der Verbrennung des Gases in der Brennkammer erzeugten Flammen die aus der Reaktoranordnung austretende Pflanzenkohle und/oder in der Pflanzenkohle noch enthaltener Biomassebrennstoff des Schüttkegels kontaktieren. Hierdurch wird eine sichere Verkohlung und insbesondere ein Nachvergasen des Biomassebrennstoffs zu einem hohen Kohleanteil erreicht.

Ferner kann der Abstand zwischen dem Schüttkegel und der Brennkammer und/oder der Abstand zwischen der Reaktoranordnung und der Brennkammer einstellbar sein. Der Kohlenstoffgehalt der Pflanzenkohle kann dann insbesondere durch eine Veränderung des Abstandes zwischen Schüttkegel und Brennkammer bzw. des Abstandes zwischen Reaktoranordnung und Brennkammer gesteuert werden.

Ferner kann durch Einbringen eines extern zugeführten Gases in die Brennkammer und durch das Verbrennen des zugeführten Gases der Verkohlungsprozess des Biomassebrennstoffs in der Reaktoranordnung gestartet werden.

Besonders vorteilhaft ist es, wenn die Vorrichtung eine luftdichte Schleuse umfasst, durch die die Pflanzenkohle aus dem Sammelbehälter heraus förderbar ist. Hierdurch kann die Vorrichtung zum Herstellen von Pflanzenkohle kontinuierlich betrieben werden, ohne dass das Verkohlen selbst oder die Verbrennung des beim Verkohlen freiwerdenden Gases durch zusätzliche, insbesondere unkontrollierte, Luftzufuhr beim Entleeren oder beim Wechsel des Sammelbehälters beeinträchtigt wird.

Ferner ist es vorteilhaft, wenn die Reaktoranordnung mindestens zwei ineinanderschiebbare Hohlprofile umfasst, durch die je nach Positionierung der Hohlprofile zueinander die Länge der Reaktoranordnung zwischen dem unteren Zufuhrbereich und der oberen Öffnung einstellbar ist, wobei das innere Hohlprofil und das äußere Hohlprofil thermisch entkoppelt sein können. Besonders vorteilhaft ist es, wenn die zwei ineinander schiebbaren Hohlprofile zwei ineinander schiebbare Rohrabschnitte sind. Besonders vorteilhaft ist es, wenn die Längsachse der Hohlprofile gleich ist und vorzugsweise senkrecht verläuft. Eine thermische Entkopplung der Hohlprofile kann insbesondere durch einen Luftspalt zwischen den Hohlprofilen bewirkt werden, wobei der Luftspalt vorzugsweise kleiner als die Korngröße der erzeugten Pflanzenkohle ist. Zumindest ist es vorteilhaft, wenn die beiden Hohlprofile keinen unmittelbaren Kontaktbereich haben, insbesondere nicht die die Mantelfläche des inneren Hohlprofil die innere Umfangsfläche des äußeren Hohlprofils kontaktiert.

Die Verbindung des inneren Hohlprofils und des äußeren Hohlprofils kann insbesondere über Führungsbolzen erfolgen, die vorzugsweise mit einem der Hohlprofile fest verbunden sind. Ferner können die Führungsbolzen in im anderen Hohlprofil angeordnete Kulissenbahnen oder Schlitze geführt sein, wobei die Kulissenbahnen bzw. die Führungsschlitze zumindest in einem Winkelbereich eine Steigerung haben, so dass bei einer Bewegung der Führungsbolzen entlang der Schlitze eine Verschiebung eines der Hohlprofile entlang seiner Längsachse erfolgt. Hierdurch ist eine einfache Verstellung und Positionierung der Hohlprofile zueinander möglich, so dass die Länge der Reaktoranordnung zwischen dem unteren Zuführbereich und der oberen Öffnung einfach einstellbar ist.

Besonders vorteilhaft ist es, wenn das äußere Hohlprofil ein höhenverstellbarer Ring ist und wenn die Fördereinrichtung den Biomassebrennstoff von unten in das innere Hohlprofil hineinfördert. Das obere Ende des äußeren Hohlprofils ist dabei vorzugsweise derart positionierbar, dass es wahlweise an mindestens zwei Positionen oberhalb des oberen Endes des inneren Hohlprofils anordenbar ist. Hierbei ist es besonders vorteilhaft, wenn das untere Ende des äußeren Hohlprofils in jeder Position, in der es anordenbar ist, unterhalb des oberen Endes des inneren Hohlprofils angeordnet ist. Das äußere Hohlprofil und das innere Hohlprofil sind vorzugsweise mit Hilfe einer Antriebseinheit relativ zueinander in den zumindest zwei Positionen relativ zueinander positionierbar. Die Antriebseinheit kann insbesondere einen Hydraulikzylinder, einen Pneumatikzylinder oder einen Elektroantrieb umfassen, wobei zwischen Antriebseinheit und mindestens einem der Hohlprofile mindestens ein Übertragungsmittel, wie ein Bowdenzug oder eine Getriebestufe, angeordnet sein kann. Alternativ oder zusätzlich kann die Brennkammer so ausgebildet sein, dass sie in mindestens zwei Positionen oberhalb des Reaktorbereichs anordenbar ist. Insbesondere ist die Brennkammer mit Hilfe einer Antriebseinheit in den zumindest zwei Positionen positionierbar. Die Antriebseinheit kann insbesondere einen Hydraulikzylinder, einen Pneumatikzylinder oder einen Elektroantrieb umfassen, wobei zwischen Antriebseinheit und der Brennkammer mindestens ein Übertragungsmittel, wie ein Bowdenzug oder eine Getriebestufe, angeordnet sein kann. Alternativ oder zusätzlich können Luftzuführöffnungen zum Zuführen von Sekundärluft in die Brennkammer in unterschiedlichen Höhen relativ zur Reaktoranordnung angeordnet werden. Es können insbesondere mehrere Luftzuführöffnungen in unterschiedlichen Höhen in der Reaktoranordnung vorhanden sein, von denen ein Teil durch mindestens ein höhenverstellbares Verschlussmittel verschlossen wird. Die Luftzuführöffnungen können runde Löcher oder senkrechte Schlitze sein, wobei die Schlitze in gleicher Höhe angeordnet sein können und jeweils ein Bereich der Schlitze durch ein höhenverstellbares Verschlussmittel verschließbar ist.

Besonders vorteilhaft ist es, wenn die Fördereinrichtung eine Förderschnecke mit kontanter Ganghöhe hat. Hierdurch ist ein gleichmäßiger sicherer Transport des Biomassebrennstoffs durch die Fördereinrichtung möglich. Alternativ oder zusätzlich kann die Fördereinrichtung eine fliegend gelagerte Förderschnecke haben. Hierdurch erfolgt nur eine Lagerung an der Antriebsseite der Förderschnecke, so dass das der Reaktoranordnung zugewandte Ende der Förderschnecke kein Lager bzw. Führungselement hat. Hierdurch können insbesondere mechanische Beanspruchungen und damit unter der Hitzeeinwirkung der Reaktoranordnung einhergehende Probleme vermieden werden. Alternativ oder zusätzlich kann die Förderschnecke eine hohle Mittelwelle haben, durch die Primärluft zur Reaktoranordnung durchleitbar ist. Hierdurch kann der Reaktoranordnung einfach Primärluft zur Verkohlung zugeführt werden. Mit Hilfe einer Klappe, eines Schiebers oder eines sonstigen Drossel- und/oder Fördermittels, wie einem Lüfter, kann die Menge der der Reaktoranordnung zugeführten Primärluft einfach eingestellt werden.

Mit Hilfe der Fördereinrichtung, insbesondere mit Hilfe der Förderschnecke, kann kontinuierlich oder schubweise Biomassebrennstoff in die Reaktoranordnung und insbesondere in den Pyrolysebereich der Reaktoranordnung gefördert werden. Es erfolgt somit ein Zwangseintrag des Biomassebrennstoffs in die Reaktoranordnung mit Hilfe der Fördereinrichtung.

Besonders vorteilhaft ist es, wenn die Reaktoranordnung im Betrieb am oberen Ende des inneren Hohlprofils und/oder im Bereich zwischen dem oberen Ende des äußeren Hohlprofils und dem oberen Ende des inneren Hohlprofils einen Pyrolysebereich zum Verkohlen des Biomassebrennstoffs ausbildet. Hierdurch ist eine einfache Verkohlung durch die Ausbildung des Pyrolysebereichs möglich. Sowohl die Ausdehnung des Pyrolysebereichs als auch der Grad der Verkohlung kann durch die Höhenverstellung der zwei Hohlprofile zueinander und durch die Förderung des Biomassebrennstoffs mit Hilfe der Fördereinrichtung in die Reaktoranordnung und somit in den Pyrolysebereich eingestellt werden. Durch die einstellbare, vorzugsweise regelbare, Primärluftzufuhr bildet sich im Pyrolysebereich nur ein Glutbett aus. Durch die Zuführeinheit wird Biomassebrennstoff nachgeschoben und somit die Position des Glutbetts eingestellt. Durch das Verstellen des äußeren Hohlprofils in Richtung der Längsachse des Hohlprofils kann die durchs Glutbett pyrolysierte Kohle mehr oder weniger nahe an die Flammen der Brennkammer gebracht werden. Dadurch kann der Grad der Verkohlung eingestellt werden.

Um eine Überhitzung und/oder eine Verkohlung des Biomassebrennstoffs unterhalb des Pyrolysebereichs in der Reaktoranordnung zu verhindern, kann ein Kühlelement mit der Reaktoranordnung gekoppelt werden oder in die Reaktoranordnung integriert sein. Insbesondere kann dem Kühlelement Kühlwasser zum Kühlen zugeführt werden. Das erwärmte Kühlwasser kann insbesondere in einem Wärmetauscher zur Nutzung der Abwärme der Brennkammer bzw. des Abgasstroms weiter erwärmt oder separat als Warmwasser genutzt werden. Durch das Kühlelement kann der Pyrolyseprozess auf den Pyrolysebereich der Reaktoranordnung beschränkt werden.

Hierbei ist es vorteilhaft, wenn das innere Hohlprofil und/oder das äußere Hohlprofil mindestens eine Primärluftzuführöffnung hat, die vorzugsweise im Pyrolysebereich oder unterhalb des Pyrolysebereichs angeordnet ist, wobei die Primärluft der Vorrichtung vorzugsweise von außen zugeführt wird. Hierdurch wird sichergestellt, dass die zur Verkohlung des Biomassebrennstoffs erforderliche Luft bzw. der zur Verkohlung erforderliche Sauerstoff sicher und zuverlässig zugeführt wird. Hierbei ist es besonders vorteilhaft, wenn die zugeführte Primärluft vorgewärmt ist und derart zugeführt wird, dass der Biomassebrennstoff im Reaktorbereich gleichmäßig verkohlt. Hierbei ist es vorteilhaft, wenn mehrere Primärluftzuführöffnungen vorzugsweise in gleichen Winkelabständen in einer oder in mehreren Ebenen umlaufend im Pyrolysebereich oder unterhalb des Pyrolysebereichs angeordnet sind.

Ferner ist es vorteilhaft, wenn die Fördereinrichtung einen schräg nach oben gerichteten zylinderförmigen Förderabschnitt und einen Bogen umfasst, an den sich das innere Hohlprofil anschließt, wobei der Querschnitt des zylinderförmigen Förderabschnitts geringer als der Querschnitt des inneren Hohlprofils ist. Insbesondere ist der Querschnitt des Bogens am Außenradius des Bogens an dem inneren Hohlprofil zugewandten Ende gegenüber dem zylinderförmigen Förderabschnitt zugewandten Ende des Bogens vergrößert. Ferner kann mindestens eine Primärzuluftöffnung oberhalb der Außenradiusseite des Bogens angeordnet sein. Ferner kann oberhalb der Innenradiusseite des Bogens keine Primärzuluftöffnung angeordnet sein. Hierdurch kann eine gleichmäßige Verkohlung des Biomassebrennstoffs in der Reaktoranordnung erfolgen. Die Fördereinrichtung kann insbesondere einen Zuführtrichter zum Zuführen des Biomassebrennstoffs in den zylinderförmigen Förderabschnitt, insbesondere in den Bereich einer Förderschnecke, umfassen. Alternativ oder zusätzlich kann eine Zuführförderschnecke vorgesehen sein, die Biomassebrennstoff in den zylinderförmigen Förderabschnitt der Fördereinrichtung fördert. Vorzugsweise ist zwischen der Zuführförderschnecke und dem zylinderförmigen Förderabschnitt der Fördereinheit eine luftdichte Schleuse, insbesondere eine Zellradschleuse, vorgesehen, um das unkontrollierte Einströmen von Luft zu verhindern und im Brandfall das Durchbrennen des Biomassebrennstoffs von dem zylinderförmigen Förderabschnitt in die Zuführförderschnecke zu verhindern.

Weiterhin ist es vorteilhaft, wenn die Fördereinrichtung einen senkrecht nach oben gerichteten zylinderförmigen Förderabschnitt umfasst, an den sich das innere Hohlprofil anschließt, wobei mindestens zwei Primärluftzuführöffnungen in vorzugsweise gleichen Winkelabständen umlaufend im inneren Hohlprofil angeordnet sind. Hierdurch kann einfach die für die Verkohlung erforderliche Primärluft gezielt umlaufend zugeführt werden, so dass eine gleichmäßige Verkohlung des Biomassebrennstoffs in der Reaktoranordnung erfolgt.

Ferner ist es vorteilhaft, wenn die Brennkammer oberhalb, insbesondere in einem Abstand zu der Reaktoranordnung angeordnet ist, wobei die Brennkammer einen oberen Abschnitt der Reaktoranordnung umschließen kann. Hierdurch können die bei der Verkohlung freiwerdenden Gase zusammen mit der erzeugten Pflanzenkohle aus der oberen Öffnung der Reaktoranordnung, d.h. insbesondere am oberen Ende des äußeren Hohlprofils aus der Reaktoranordnung austreten, wobei die bei der Verkohlung freiwerdenden Gase in die Brennkammer eintreten. Hierdurch ist ein einfacher Aufbau der Vorrichtung sowohl zum Erzeugen der Pflanzenkohle als auch zum Verbrennen des bei der Verkohlung freiwerdenden Gases möglich.

Ferner ist es vorteilhaft, wenn der Brennkammer zur Verbrennung des bei der Verkohlung freiwerdenden Gases Sekundärluft zuführbar ist. Die Vorrichtung kann ferner insbesondere mindestens einen Sensor, beispielsweise eine Lambda-Sonde umfassen. Der Sensor erfasst mindestens einen Abgasparameter des aus der Brennkammer austretenden Abgasstroms. Die Menge der der Brennkammer zugeführten Sekundärluft ist vorzugsweise einstellbar. Dies kann beispielsweise in Abhängigkeit des vom Sensor ermittelten Wert des Abgasparameters erfolgen. Hierdurch ist eine einfache Steuerung des Verbrennungsprozesses des Gases möglich, um insbesondere die Verbrennung über die Sauerstoffzufuhr so zu steuern, dass nur eine geringe Menge an Schadstoffen entsteht.

Ferner ist es vorteilhaft, wenn die Vorrichtung mindestens einen Vorwärmbereich, insbesondere einen Wärmetauscher, zum Erwärmen der Sekundärluft hat. Die Sekundärluft kann insbesondere mit Hilfe des Abgasstroms in einem Wärmetauscher erwärmt werden. Hierdurch ist eine energieeffizientere Verbrennung des beim Verkohlen erzeugten Gases möglich.

Vorteilhaft ist es, wenn die Brennkammer einen Abschnitt mit einem rotationssymmetrischen Querschnitt hat. Besonders vorteilhaft ist es, wenn der Abschnitt ein gerader Abschnitt ist, vorzugsweise ein Hohlzylinder oder ein hohles Vieleckprofil. Zusätzlich oder alternativ kann die Brennkammer einen hohlen, kegelförmigen, rotationssymmetrischen Abschnitt haben, insbesondere einen regelmäßigen Tetraederstumpf einen hohlen Pyramidenstumpf oder einen hohlen Kreiskegelstumpf. Der gerade Abschnitt kann zwischen der Reaktoranordnung und dem kegelförmigen Abschnitt angeordnet sein. Vorzugsweise ist der gerade Abschnitt in einer horizontalen Ebene über der Reaktoranordnung angeordnet und hat somit einen Abstand zur Reaktoranordnung. Eine erste Seite des kegelförmigen Abschnitts mit dem größeren Querschnitt als die gegenüberliegende zweite Seite des kegelförmigen Abschnitts ist fest, vorzugsweise gasdicht, mit der der Reaktoranordnung abgewandten Seite des geraden Abschnitts verbunden. Die der ersten Seite gegenüberliegende zweite Seite des kegelförmigen Abschnitts ist fest, vorzugsweise gasdicht, mit einer Abgasleitung zum Ableiten des aus der Brennkammer austretenden Abgasstroms verbunden. Vorzugsweise haben die Reaktoranordnung, die Brennkammer bzw. die Abschnitte der Brennkammer und ein sich der Brennkammer anschließender Abschnitt der Abgasleitung eine gemeinsame Mittelachse und sind entlang dieser vorzugsweise vertikalen Mittelachse übereinander angeordnet. Durch den oder die rotationssymmetrischen Abschnitte der Brennkammer und/oder den sich anschließenden rotationssymmetrischen Abschnitt der Abgasleitung wird eine rotierende Gasbewegung um die Mittelachse des oder der rotationssymmetrischen Abschnitte und im Bereich des Schüttkegels der Reaktoranordnung erzeugt, wodurch eine gleichmäßige und sichere Verkohlung und insbesondere ein Nachvergasen des Biomassebrennstoffs zu einem hohen Kohleanteil bei guten Abgaswerten des Abgasstroms erreicht wird.

Ferner ist es vorteilhaft, wenn die Vorrichtung einen Temperatursensor umfasst, der die Temperatur unterhalb eines Pyrolysebereichs der Reaktoranordnung erfasst und dass die Fördereinheit den Biomassebrennstoff abhängig von der erfassten Temperatur in die Reaktoranordnung fördert. Hierdurch kann der Verkohlungsprozess einfach gesteuert werden. Insbesondere kann der Pyrolysebereich zur Verkohlung des Biomassebrennstoffs einfach in seiner Höhe verändert werden, so dass durch das Nachfördern des Biomassebrennstoffs Pflanzenkohle an der oberen Öffnung der Reaktoranordnung austritt und nach unten fällt, so dass diese Pflanzenkohle nicht vollständig verbrannt wird. Besonders vorteilhaft ist es, wenn die Vorrichtung ein luftdichtes Außengehäuse hat.

Dann können sowohl das Verkohlen als auch das Verbrennen des beim Verkohlen entstehenden Gases einfach gesteuert werden. Besonders vorteilhaft ist es, wenn die Vorrichtung im Pyrolysebereich bzw. in der Reaktoranordnung keine zum Erzeugen der Pflanzenkohle bzw. zum Verkohlen des Biomassebrennstoffs erforderlichen beweglichen Teile hat. Hierdurch ist die Vorrichtung besonders robust und einfach zu handhaben.

Als Biomassebrennstoff können insbesondere Biomassehack- und/oder Holzhackschnitzel eingesetzt werden. Bei diesen Hackbrennstoffen sind Zwischenräume vorhanden, durch die eine gleichmäßige Verkohlung des Biomassebrennstoffs in der Reaktoranordnung bzw. im Pyrolysebereich möglich ist.

Ferner kann die Vorrichtung einen Fluidwärmetauscher umfassen, um mit Hilfe der bei der Verbrennung des beim Verkohlen freiwerdenden Gases erzeugten Wärme einfach eine Flüssigkeit zu erwärmen. Insbesondere kann im Fluidwärmetauscher Wasser erwärmt und/oder Wasserdampf erzeugt werden. Hierdurch sind eine einfache Wärmeabfuhr und eine einfache weitere Nutzung der erzeugten Wärme möglich.

Weitere Vorteile und Merkmale ergeben sich aus der nachfolgenden Beschreibung, die mehrere Ausführungsformen in Verbindung mit den beigefügten Figuren erläutert.

Es zeigt:
- Fig.1: eine Schnittdarstellung einer Seitenansicht einer Vorrichtung zum Erzeugen von Pflanzenkohle gemäß einer ersten Ausführungsform;
- Fig. 2: eine Schnittdarstellung der Vorrichtung nach Fig. 1 entlang der Schnittlinie E-E;
- Fig. 3: eine Schnittdarstellung einer Seitenansicht einer Vorrichtung zum Erzeugen von Pflanzenkohle gemäß einer zweiten Ausführungsform;
- Fig. 4: eine teilgeschnittene Darstellung einer weiteren Seitenansicht der Vorrichtung nach Fig. 3;
- Fig. 5: eine Schnittdarstellung einer Vorrichtung zum Erzeugen von Pflanzenkohle gemäß einer dritten Ausführungsform; und
- Fig. 6: eine teilgeschnittene Darstellung einer Reaktoranordnung zum Einsatz in einer Vorrichtung nach Fig.1 bis Fig.5.

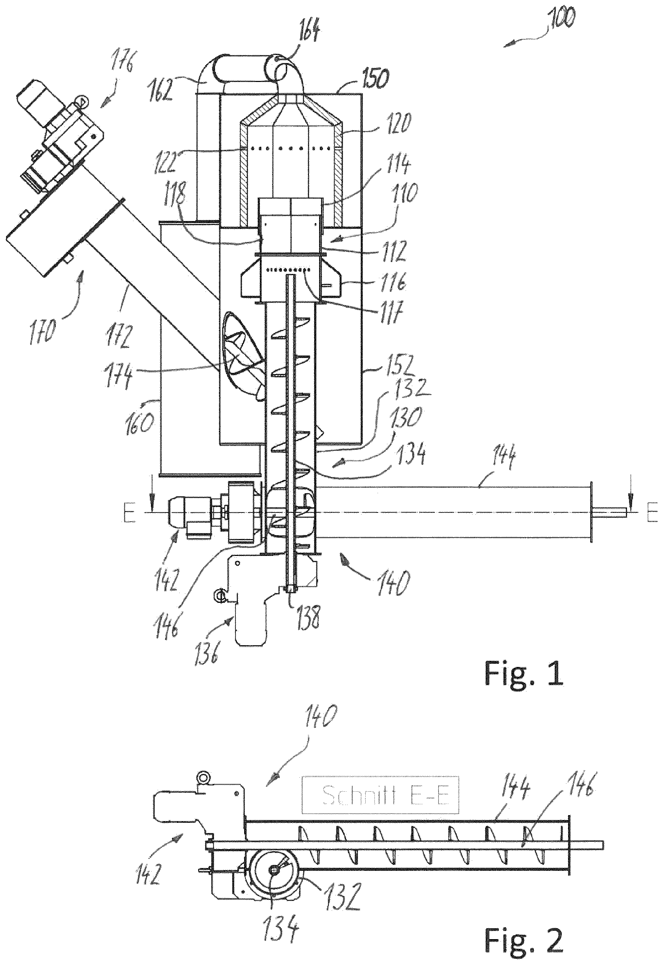

Fig.1 zeigt eine Schnittdarstellung einer Seitenansicht einer Vorrichtung 100 zum Erzeugen von Pflanzenkohle gemäß einer ersten Ausführungsform. Die Vorrichtung 100 hat eine Reaktoranordnung 110, die ein erstes inneres Reaktorrohr 112 und ein zweites äußeres Reaktorrohr 114 sowie eine Ringkammer 116 mit Außenluftanschluss zum Zuführen und Verteilen von Primärluft hat. Die Ringkammer 116 und das innere Rohr 112 sind ortsfest in einem Gehäuse 150 der Vorrichtung 100 angeordnet. Das äußere Rohr 114 ist gegenüber dem inneren Rohr 112 und dem Gehäuse 150 in seiner Höhe einstellbar. Bei anderen Vorrichtungen kann jedoch auch nur ein einziges Rohr vorgesehen sein, so dass die Reaktoranordnung 110 immer dieselbe Länge bzw. Höhe hat.

Durch die bei der Vorrichtung 100 mögliche Veränderung der Gesamthöhe der Reaktoranordnung 110 kann die Reaktoranordnung 110 an die Art des Biomassenbrennstoffs angepasst werden. Ferner kann durch die Einstellung der Höhe der Grad der Verkohlung des Biomassebrennstoffs in der Reaktoranordnung 110 beeinflusst werden. Die Verkohlung selbst erfolgt durch Zuführen von Primärluft über die Ringkammer 116 in die umlaufend im Rohr 112 unterhalb eines Verkohlungs- bzw. Pyrolysebereichs der Reaktoranordnung 110 in der Wandung des Rohrs 112 angeordneten Primärluftlöcher 117. Hierdurch kann durch die Einstellung der der Ringkammer 116 zugeführten Menge an Luft das Verkohlen des Biomassebrennstoffs beeinflusst werden, so dass sowohl der Grad der Verkohlung als auch der Anteil des bei der Verkohlung entstehenden brennbaren Gases als auch die Menge der erzeugten Pflanzenkohle steuerbar ist.

Oberhalb der Reaktoranordnung 110 ist eine Brennkammer 120 in Form einer Brennglocke angeordnet, wobei ein oberer Teil der Reaktoranordnung 110, insbesondere zumindest das äußere Rohr 114 innerhalb der Brennkammer 120 angeordnet ist. Die Brennkammer 120 hat Sekundärzuluftöffnungen 122, denen Sekundärluft von außen zur Verbrennung des bei der Verkohlung des Biomassebrennstoffs entstehenden Gases zuführbar ist.

Die in der Reaktoranordnung 110 erzeugte Pflanzenkohle wird aus dem äußeren Rohr 114 nach oben hinaus gedrückt, wobei Pflanzenkohle seitlich über den Rand des äußeren Rohrs 114 nach unten in einen Sammelbehälter 152 des Gehäuses 150 fällt. Das Gehäuse 150 ist luftdicht ausgebildet, so dass lediglich die Primärluft über die Ringkammer 116 und die Sekundärluft über die Öffnungen 122 der Vorrichtung 100 zuführbar ist. Die nach oben aus der Reaktoranordnung 110 heraus gedrückte Pflanzenkohle bildet einen Schüttkegel, wobei die Oberfläche des Schüttkegels durch die Verbrennung des Gases in der Brennkammer 120 erwärmt und nachvergast wird.

Die bei der Verbrennung des Gases und bei der Verkohlung weiterhin entstehenden nicht brennbaren Gase und Staubpartikel werden über das Abgasrohr 162 einem Fluidwärmetauscher 160 zugeführt. Der Fluidwärmetauscher 160 kann eine Flugaschefalle umfassen, so dass das aus einem nicht dargestellten Abzugsrohr abgeführte Abgas keine Asche oder nur einen geringen Anteil Asche enthält.

Über den Fluidwärmetauscher 160 kann insbesondere Wasser erwärmt werden, wobei es auch möglich ist, Dampf zu erzeugen, der dann weiterverwendet wird. Im Abgasrohr 162 ist ein Abgassensor 164, insbesondere eine Lambda-Sonde, vorgesehen. Über die Lambda-Sonde kann insbesondere die Primärluftzufuhr und/oder die Sekundärluftzufuhr zur Vorrichtung 100 oder das Nachfördern von Biomassebrennstoff in die Reaktoranordnung 110 gesteuert werden. Wird eine Lambda-Sonde als Sensor 164 verwendet, vergleicht diese den Restsauerstoffgehalt im Abgas mit dem Sauerstoffgehalt der Umgebungsluft. Daraus kann das Verbrennungsverhältnis bestimmt und damit eingestellt werden.

Der Biomassebrennstoff wird aus einem nicht dargestellten Vorrat oder über einen Trichter bereitgestellt und der Reaktoranordnung 110 mit Hilfe eines Horizontalförderers 140 und eines Vertikalförderers 130 zugeführt. Die Förderer 130, 140 sind jeweils Schneckenförderer mit im wesentlichen gleichen Aufbau. Der Vertikalförderer 130 hat einen Förderzylinder 132 und eine in dem Förderzylinder 132 angeordnete Förderschnecke 134. Die Förderschnecke 134 ist fliegend angeordnet, d.h. nur antriebsseitig gelagert. Das gegenüberliegende Ende der Förderschnecke 134 ist frei. Ferner ist im Inneren der Förderschnecke 134 eine durchgehende Öffnung vorhanden, durch die über eine Einlassöffnung 138 Luft bis in die Reaktoranordnung 110 bzw. unterhalb der Reaktoranordnung 110 geleitet werden kann. Diese Luft dient ebenfalls wie die durch die Öffnung 117 geleitete Luft als Primärluft zur Verkohlung des Biomassebrennstoffs in der Reaktoranordnung 110. Die Luftzufuhr über die Luftzuführöffnung 138 kann durch das Vorsehen entsprechender Klappen oder Ventile eingestellt werden. Ferner kann auch Luft in die Öffnung hineingefördert werden, beispielsweise mit Hilfe eines Gebläses.

Der Horizontalförderer 140 umfasst einen Zylinder 144 und eine mit Hilfe eines Motors 142 angetriebene Förderschnecke 146. Vorzugsweise hat der Zylinder 132 des Vertikalförderers 130 einen größeren Durchmesser als der Zylinder 144 des Horizontalförderers 140. Alternativ kann bei gleichem Innendurchmesser der Zylinder 144, 132 die Förderleistung des Horizontalförderers 140 geringer sein, infolge einer anderen Steigung der Förderschnecke 146 gegenüber der Steigung der Förderschnecke 134 und/oder durch eine andere Antriebsdrehzahl der Förderschnecken 142, 134.

Ferner ist es vorteilhaft, wenn das innere Rohr 112 einen größeren Innendurchmesser als der Zylinder 132 hat und wenn das obere Rohr 114 einen größeren Innendurchmesser hat als das innere Rohr 112. Hierdurch ist beim Fördern des Biomassebrennstoffs mit Hilfe der Förderer 140, 130 und durch die Reaktoranordnung 110 hindurch sichergestellt, dass der Biomassebrennstoff aufgrund der Geometrie der gesamten Förderstrecke nicht zusammengepresst wird, sondern einfach durch die jeweiligen Förderbereiche hindurchtransportiert werden kann.

In der Wandung des inneren Rohrs 112 ist eine Öffnung vorhanden, an deren Innenseite ein Temperatursensor an einem Blech angeordnet ist. Der Temperatursensor ist etwa mittig der Öffnung am Blech befestigt. Das Blech hat lediglich einen geringen Kontaktbereich zur inneren Wandung, so dass der Temperatursensor die Temperatur des Biomassebrennstoffs im Bereich des Sensors 118 relativ exakt erfassen kann. Der Bereich zur Verkohlung des Biomassebrennstoffs in der Reaktoranordnung 110, der auch als Pyrolysebereich bezeichnet wird, soll den Erfassungsbereich des Sensors 118 nicht unterschreiten, d.h. die Verkohlung soll nicht unterhalb des Sensors 118 stattfinden, so dass hierdurch insbesondere der Vertikalförderer 130 vor zu starker Hitzeeinwirkung geschützt ist. Erfasst der Temperatursensor 118 einen starken Anstieg der Temperatur, was insbesondere beim Absinken des Pyrolysebereichs in den Bereich des Temperatursensors 118 erfolgt, so werden die Förderer 130, 140 aktiviert und Biomassebrennstoff in die Reaktoranordnung 110 hineingefördert, wodurch der aktuelle Pyrolysebereich nach oben geschoben und Pflanzenkohle oben aus der Reaktoranordnung 110 herausgedrückt wird und die Pflanzenkohle seitlich über den Rand des oberen Rohrs 114 nach unten in den Sammelbehälter 152 fällt. Ferner umfasst die Vorrichtung 100 einen Schrägförderer 170, mit dessen Hilfe Pflanzenkohle aus dem Sammelbehälter 152 heraus gefördert werden kann. Schrägförderer 170 umfasst einen Zylinder 172 und eine mit Hilfe eines Motors 176 angetriebene Förderschnecke 174, die fliegend gelagert ist. Vorzugsweise hat der die Förderschnecke 174 eine kontinuierlich zunehmende Steigung, um Verpressungen der Pflanzenkohle im Schrägförderer 170 zu vermeiden.

Fig.2 zeigt eine Schnittdarstellung der Vorrichtung 100 nach Fig.1 entlang der Schnittlinie E-E. Somit zeigt Fig.2 einen Horizontalschnitt des Horizontalförderers 140, wobei in der Schnittdarstellung zusätzlich die Spindel 134 und der Zylinder 132 des Vertikalförderers 130 sichtbar sind.

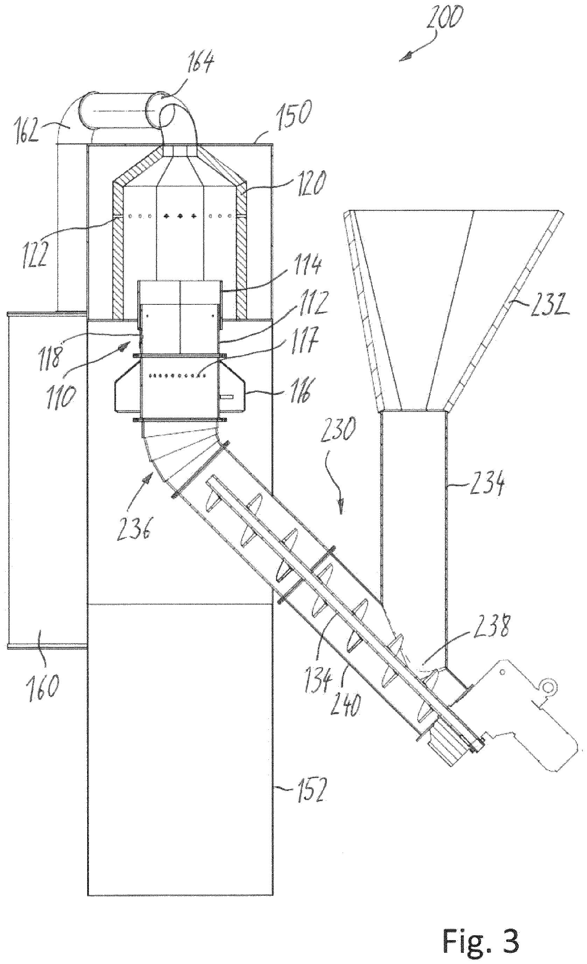

Fig.3 zeigt eine Schnittdarstellung einer Seitenansicht einer Vorrichtung 200 zum Erzeugen von Pflanzenkohle gemäß einer zweiten Ausführungsform. Elemente, die in ihrer Struktur und/oder Funktion mit Elementen der ersten Ausführungsform nach den Fig.1 und 2 übereinstimmen, haben auch nachfolgend dieselben Bezugszeichen. Die Vorrichtung 200 unterscheidet sich von der Vorrichtung 100 im Wesentlichen dadurch, dass anstatt des Vertikalförderers 130 ein Schrägförderer 230 eingesetzt wird, dessen oberes Ende über einen Bogen 236 mit dem unteren Ende der Reaktoranordnung 110 verbunden ist. Der Biomassebrennstoff wird der Vorrichtung 200 über einen Trichter 232 zugeführt. Der Biomassebrennstoff gelangt über den Trichter 232 in ein mit dem unteren Ende des Trichters 232 verbundenes Fallrohr 234 und gelangt über das Fallrohr 234 über eine Öffnung 238 in den Zylinder 240 des Schrägförderers 230.

Der Bogen 236 hat vorzugsweise einen Austrittsquerschnitt an der Übergangsstelle vom Bogen 236 zum inneren Rohr 112, der größer ist als der Eintrittsquerschnitt an der Übergangsstelle zwischen dem Schrägförderer 230 und dem Bogen 236. Die Querschnittsvergrößerung kann stufenweise erfolgen, wobei der Querschnitt von unten nach oben hin zunimmt. Durch die Querschnittsvergrößerung wird insbesondere erreicht, dass eine Komprimierung des Biomassebrennstoffs im Bereich des Bogens 236 vermieden wird. Bei einem gleichförmigen Bogen, bei dem Eintrittsquerschnitt gleich Austrittsquerschnitt ist, würde die Gefahr bestehen, dass der Biomassebrennstoff im Bogen selbst komprimiert wird, so dass es zu einer Verstopfung und zu einer Störung des Betriebs der Vorrichtung 200 kommt.

Im unteren Bereich des Gehäuses 150 ist bei dieser Ausführungsform nach Fig.3 ein vom übrigen Gehäuse 150 trennbarer unterer Gehäusebereich 152 vorgesehen, der insbesondere in Betriebspausen der Vorrichtung 200 von den übrigen Gehäuseelementen abtrennbar ist, wodurch die im Sammelbehälter 152 gesammelte Pflanzenkohle mit dem Sammelbehälter 152 von der Vorrichtung 200 weg transportiert werden kann, wobei der Sammelbehälter 152 gegen einen gleichartigen Sammelbehälter ausgetauscht werden kann oder entleert und wieder eingesetzt werden kann.

Der übrige Aufbau und die Funktion der Vorrichtung 200 stimmen mit dem Aufbau und der Funktion der Vorrichtung 100 nach den Fig.1 und 2 überein.

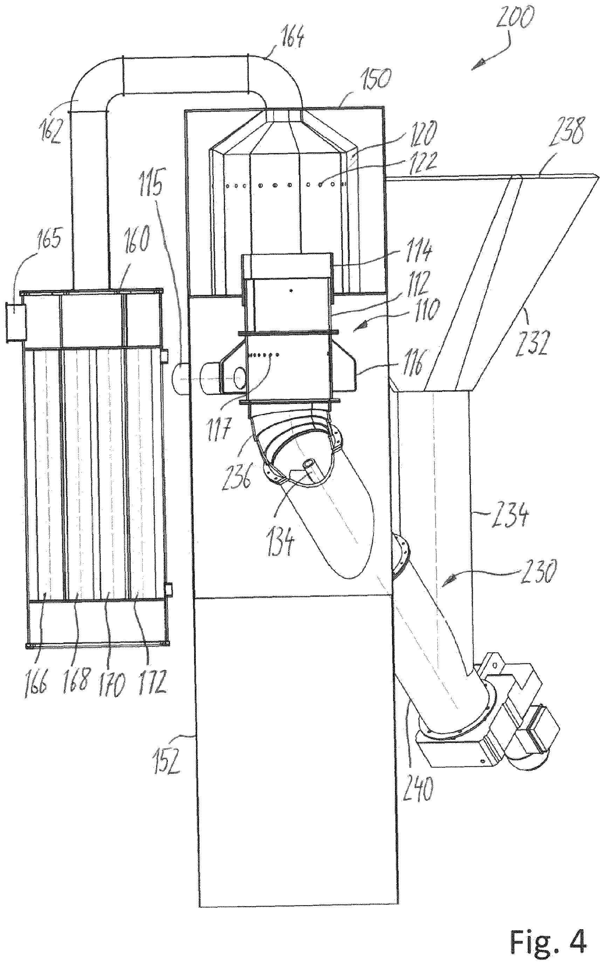

Fig.4 zeigt eine teilgeschnittene Darstellung einer weiteren Seitenansicht der Vorrichtung 200 nach Fig.3. In dieser teilgeschnittenen Darstellung sind insbesondere die Wärmetauschelemente 166 bis 172 des Wärmetauschers 160 in der geschnittenen Darstellung zu sehen. Ferner ist ein Außenluftanschlussstutzen 115 der Ringkammer 116 zu sehen. Der Wärmetauscher 160 hat ferner einen Abgasstutzen 165, durch den das Abgas an die Umgebung entweicht. Der Wärmetauscher 160 kann ferner eine Flugaschefalle enthalten, durch die Flugasche im Wärmetauscher 160 zurückgehalten wird, die dann auf geeignete Weise aus dem Wärmetauscher 160 entfernt und entsorgt werden kann.

Um den Verkohlungs- und Verbrennungsprozess kontinuierlich durchführen zu können, kann auch ein Abdichtelement, wie beispielsweise ein Schieber zwischen dem Sammelgehälter 152 und dem übrigen Gehäuseabschnitt vorgesehen sein, der den unteren Bereich des Gehäuses 152 verschließt, wenn der Sammelbehälter 152 zur Entsorgung der erzeugten Pflanzenkohle entfernt worden ist. Anschließend kann der Sammelbehälter 152 wieder mit dem übrigen Gehäuse 150 verbunden werden, wobei anschließend der Schieber entfernt bzw. geöffnet werden kann.

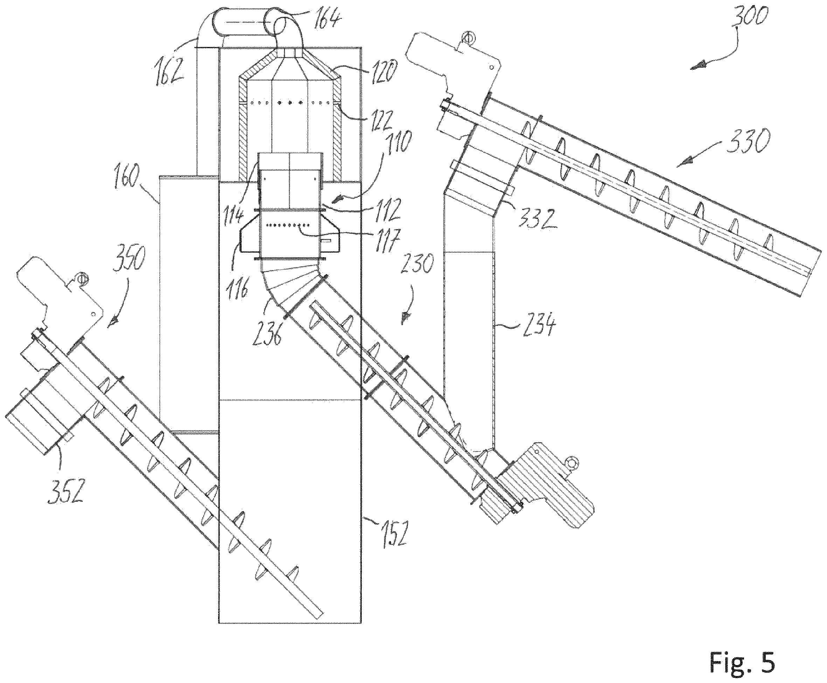

Fig.5 zeigt eine Schnittdarstellung einer Vorrichtung 300 zum Erzeugen von Pflanzenkohle gemäß einer dritten Ausführungsform. Die Vorrichtung 300 unterscheidet sich von der Vorrichtung 200 nach Fig.4 dadurch, dass der Biomassebrennstoff mit Hilfe eines weiteren Schrägförderers 330 aus einem Vorrat in das Fallrohr 232 gefördert und so dem Schrägförderer 230 zugeführt wird. Ferner ist ein Schrägförderer 350 vorgesehen, mit dessen Hilfe Pflanzenkohle aus dem Sammelbehälter 152 heraus gefördert werden kann. Zwischen dem Fallrohr 234 und dem Schrägförderer 330 ist eine erste Zellradschleuse 332 und nach dem Schrägförderer 350 ist eine zweite Zellradschleuse 352 vorgesehen, durch die ein luftdichter Verschluss der Fördereinheit 330 bzw. 350 gegenüber der Umgebung möglich ist, so das der Vorrichtung 300 weder über die Förderer 330, 230 noch über den Förderer 350 unkontrolliert Frischluft zugeführt wird. Die Zellradschleusen 232, 352 dienen auch als Brandsperre, die den Durchtritt eines Brandherdes in einem Fehlerfall der Vorrichtung 300 verhindern. Solche Zellradschleusen 232, 352 oder andere geeignete Brandschotts können auch bei den Vorrichtungen 100 und 200 eingesetzt werden.

Über die hohle Förderschnecke 134 des Schrägförderers 230 kann jedoch, wie bereits in Verbindung mit den Fig.1 und 2 beschrieben, gezielt Primärluft der Reaktoranordnung 110 zugeführt werden.

Bei den Vorrichtungen 100, 200, 300 kann das obere Rohr 114 in mehreren fest voreinstellbaren Positionen fixiert werden, so dass vor Inbetriebnahme der Vorrichtung die Gesamtlänge der Reaktoranordnung 110, die durch das untere Ende des inneren Rohrs 112 und das obere Ende des äußeren Rohrs 114 festgelegt wird, fest voreingestellt werden. Alternativ oder zusätzlich kann eine von außen zugängliche mechanische Verstellmöglichkeit vorgesehen werden, so dass die Gesamtlänge der Reaktoranordnung 110 während des Betriebs der Reaktoranordnung 110 verändert werden kann. Alternativ oder zusätzlich können Antriebsmittel, wie pneumatische, hydraulische oder elektromotorische Antriebsmöglichkeiten vorgesehen sein, die insbesondere über Bowdenzüge oder über Getriebeelemente eine Höhenverstellung der Reaktoranordnung 110 vorzugsweise automatisch durchführen können.

Durch die Fallrohre 234 bei den Vorrichtungen 200 und 300 erfolgt ein senkrechter Falleintrag des Biomassebrennstoffs in die Förderschnecke 134. Am Fallrohr 234 können Sensoren vorgesehen sein, die die Förderleistung des Förderers 230 bzw. 330 steuern, insbesondere den Förderer 230, 330 ein- und ausschalten.

Das Biomassematerial kann insbesondere ein Pflanzenmaterial, wie Hackschnitzel, sein, die aus einem Vorratsbunker in die Reaktoranordnung 110, d.h. in den Pyrolysebereich der Reaktoranordnung 110 gefördert werden. Besonders vorteilhaft ist es, wenn zumindest eine der Zuführschnecken mindestens eine Zellradschleuse und/oder eine Rückbrandklappe zur Vermeidung des Brennens des Biomassematerials in einem der Förderer aufweist. Sowohl am Luftzuführrohr 115 als auch an der Zuführöffnung 138 können Klappen und/oder Schieber zur Reduzierung der zugeführten Luftmenge als auch Lüfter oder andere Zuführmittel zum Zuführen von Primärluft in den Pyrolysebereich der Reaktoranordnung 110 vorgesehen sein.

Zum Inbetriebnehmen der Vorrichtung 100, 200, 300 kann das Biomassebrennmaterial am oberen Ende der Reaktoranordnung 110, d.h. am oberen Ende des äußeren Rohrs 114, oder in der Reaktoranordnung 110 insbesondere mit Hilfe eines Heißluftgebläses oder eines Glühkolbens ähnlich wie bei einer Hackschnitzel- oder Pelletheizung gestartet werden, wodurch der Verkohlungsvorgang in Gang gebracht wird. Abhängig von der zugeführten Primärluft kann dann von einer anfänglichen Verbrennung des Biomassebrennstoffs zu einer Verkohlung des Biomassebrennstoffs überführt werden, wobei sich ein Pyrolysebereich in der Reaktoranordnung 110 ausbildet. Besonders vorteilhaft ist es, wenn am Abzugsstutzen 165 bzw. an einem mit dem Abzugstutzen 165 verbundenen Abgasrohr ein Saugzuggebläse vorgesehen ist, mit dessen Hilfe das Abgas aus der Brennkammer 120 durch den Wärmetauscher 160 hindurch transportiert bzw. abgesaugt wird. Hierdurch ist auch die Strömungsgeschwindigkeit und somit die abgeführte Abgasmenge einfach einstellbar, so dass auch hierdurch der Verkohlungsprozess in der Reaktoranordnung 110 zum Verkohlen des Biomassebrennstoffs zu Pflanzenkohle einfach gesteuert werden kann.

An oder nach dem Förderer 350 ist vorzugsweise ein luftdichter Abschluss, insbesondere mit Hilfe einer Wasserschleuse oder einer Zellradschleuse 352 am Austrag vorgesehen. Die Wasserschleuse dient insbesondere zur Abkühlung der erzeugten Pflanzenkohle, so dass keine Brand- oder Schwelgefahr von der aus dem Sammelbehälter 152 geförderten Pflanzenkohle ausgeht.

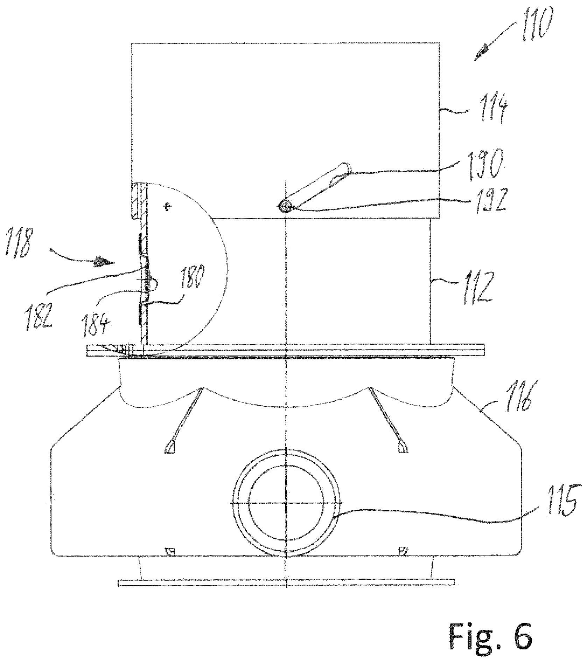

Fig.6 zeigt eine teilgeschnittene Darstellung einer Reaktoranordnung 110 zum Einsatz in einer Vorrichtung 100, 200, 300 nach Fig.1 bis Fig.5. Im geschnittenen Bereich ist der Temperatursensor 118 detailliert dargestellt. In der Wandung der Reaktoranordnung 110 ist eine Öffnung 180 vorgesehen, in die ein Sensorträgerelement 182 mit einem Sensorelement 184 eingesetzt ist. Sensorträgerelement 182 hat eine kleinere geringere thermische Trägheit als die Wandung der Reaktoranordnung 110. Insbesondere hat das Sensorträgerelement 182 hat eine geringere Wandstärke als die Wandung der Reaktoranordnung 110. Hierdurch kann die Temperatur in der Reaktoranordnung 110 einfach und genau mit Hilfe des Sensorelements 184 erfasst werden. Das Sensorelement 184 steht vorzugsweise nicht aus dem Sensorträgerelements 182 in den Innenraum der Reaktoranordnung 110 hinein. Zusätzlich oder alternativ ragt das Sensorträgerelement 182 nicht in den Innenraum des Reaktors 110 hinein sondern ist vorzugsweise an der Innenseite der Reaktoranordnung 110 bündig mit der Wandung der Reaktoranordnung 110.

Die Reaktoranordnung 110 nach Fig.6 hat einen Mechanismus zur Höhenverstellung des äußeren Hohlprofils 114 gegenüber dem inneren Hohlprofil 112. Der Mechanismus umfasst drei im Abstand von 120° im äußeren Hohlprofil 114 vorhandene schräg nach oben bzw. schräg nach unten verlaufende Langlöcher 190 in die jeweils ein vom inneren Hohlprofil 112 abstehender Eingriffsbolzen 192 eingreift. Aufgrund der Reibung zwischen dem Rand des Langlochs 190 und dem Eingriffsbolzen 192 verbleibt das äußere Hohlprofil 114 in einer durch die Positionierung des Langlochs 190 relativ zum Eingriffsbolzen 192 festgelegten Position. Zusätzlich können am Rand des Langlochs 190 Ausnehmungen oder Stufen vorhanden sein, in die der Eingriffsbolzen 192 eingreift, so dass verschiedene Positionen des äußeren Hohlprofils 114 einfach einstellbar sind. Hierdurch ist eine einfache und sichere Änderung der Länge der Reaktoranordnung 110 möglich. Bei anderen Reaktoranordnungen 110 können andere Mechanismen zur Höhenverstellung vorgesehen sein.

### Bezugszeichenliste

- 100, 200, 300: Vorrichtung
- 110: Reaktoranordnung
- 112: inneres Hohlprofil
- 114: Äußeres Hohlprofil
- 115: Zuführrohr
- 116: Ringkammer mit Außenluftanschluss
- 117: Primärluftlöcher
- 118: Temperatursensor
- 120: Brennkammer (Glocke)
- 122: Sekundärluftöffnungen
- 130: Vertikalförderer
- 132, 144, 240: Zylinder
- 134: Förderschnecke
- 136: Motor
- 138: Luftzuführöffnung
- 140: Horizontalförderer
- 142: Motor
- 146: Förderschnecke
- 150: Gehäuse
- 152: Sammelbehälter
- 160: Fluidwärmetauscher mit Flugaschefalle
- 162: Abgasrohr
- 164: Abgassonde
- 165: Abgasstutzen
- 166 bis 172: Wärmetauschelement
- 180: Öffnung
- 182: Sensorträgerelement
- 184: Sensorelement
- 190: Langloch
- 192: Eingriffsbolzen
- 230, 330, 350: Schrägförderer
- 232: Zuführtrichter
- 234: Fallrohr
- 236: Bogen (stufig konisch nach oben hin öffnend)
- 238: Öffnung
- 332, 352: Zellradschleuse

## Patentansprüche

1. Vorrichtung zum Herstellen von Pflanzenkohle und/oder zur Wärmegewinnung,
mit einer Reaktoranordnung (110) zum Verkohlen eines Biomassebrennstoffs zu Pflanzenkohle,
mit einer Brennkammer (120) zur Verbrennung zumindest eines Teils des beim Verkohlen freiwerdenden Gases,
mit einer mit Hilfe einer Antriebseinheit (136) antreibbaren Fördereinrichtung (130) zum Fördern des Biomassebrennstoffs, **dadurch gekennzeichnet,**
**dass** die Fördereinrichtung (130) den Biomassebrennstoff von unten in die Reaktoranordnung (110) hineinfördert.

2. Vorrichtung nach Anspruch 1, **dadurch gekennzeichnet, dass** die Fördereinrichtung (130) den Biomassebrennstoff senkrecht von unten in die Reaktoranordnung (110) hineinfördert.

3. Vorrichtung nach einem der vorhergehenden Ansprüche, **dadurch gekennzeichnet, dass** die bei der Verkohlung in der Reaktoranordnung (110) erzeugte Pflanzenkohle beim Hineinfördern von weiterem Biomassebrennstoff von unten in die Reaktoranordnung (110) aus einer oberen Öffnung der Reaktoranordnung (110) austritt, wobei die aus der oberen Öffnung austretende Pflanzenkohle vorzugsweise einen Schüttkegel bildet und insbesondere seitlich an der Reaktoranordnung (110) nach unten in einen Sammelbehälter (152) fällt.

4. Vorrichtung nach Anspruch 3, **dadurch gekennzeichnet, dass** die Reaktoranordnung (110) und die Brennkammer (120) derart ausgebildet und zueinander angeordnet sind, dass durch die Verbrennung des Gases in der Brennkammer (120) die die aus der Reaktoranordnung austretende Pflanzenkohle und/oder in der Pflanzenkohle noch enthaltener Biomassebrennstoff an der Oberfläche des Schüttkegels erwärmt wird, wobei insbesondere die aus der Reaktoranordnung (110) austretende Pflanzenkohle und/oder in der Pflanzenkohle noch enthaltener Biomassebrennstoff nachvergast wird, und /oder wobei die bei der Verbrennung des Gases in der Brennkammer (120) erzeugten Flammen die aus der Reaktoranordnung austretende Pflanzenkohle und/oder in der Pflanzenkohle noch enthaltener Biomassebrennstoff des Schüttkegels kontaktieren.

5. Vorrichtung nach einem der vorhergehenden Ansprüche, **dadurch gekennzeichnet, dass** die Reaktoranordnung (110) mindestens zwei ineinander schiebbare Hohlprofile (112, 114), insbesondere mindestens zwei ineinander schiebbare Rohrabschnitte (112, 114), umfasst, durch die je nach Positionierung der Hohlprofile (112, 114) zueinander die Länge der Reaktoranordnung (110) zwischen dem unteren Zuführbereich und der oberen Öffnung einstellbar ist, wobei das innere Hohlprofil (112) und das äußere Hohlprofil (114) vorzugsweise thermisch entkoppelt sind.

6. Vorrichtung nach Anspruch 5, **dadurch gekennzeichnet, dass** das äußere Hohlprofil ein höhenverstellbarer Ring (114) ist, dass die Fördereinrichtung (130) den Biomassebrennstoff von unten in das innere Hohlprofil (112) hineinfördert, dass das obere Ende des äußeren Hohlprofils (114) derart positionierbar ist, dass es wahlweise an mindestens zwei Positionen oberhalb des oberen Endes des inneren Hohlprofils (112) anodenbar ist.

7. Vorrichtung nach einem der vorhergehenden Ansprüche, **dadurch gekennzeichnet, dass** die Fördereinrichtung (130) eine Förderschnecke (134) mit konstanter Ganghöhe hat und/oder dass die Fördereinrichtung (130) eine fliegend gelagerte Förderschnecke (134) und/oder eine hohle Förderschnecke (134) zum Durchleiten von Primärluft in der Reaktoranordnung (110) hat.

8. Vorrichtung nach einem der vorhergehenden Ansprüche, **dadurch gekennzeichnet, dass** die Reaktoranordnung (110) im Betrieb am oberen Ende des inneren Hohlprofils (112) und/oder im Bereich zwischen dem oberen Ende des äußeren Hohlprofils (114) und dem oberen Ende des inneren Hohlprofils (112) einen Pyrolysebereich zum Verkohlen des Biomassebrennstoffs ausbildet.

9. Vorrichtung nach Anspruch 8, **dadurch gekennzeichnet, dass** das innere Hohlprofil und/oder das äußere Hohlprofil (114) mindestens eine Primärluftzuführöffnung (117) hat, die vorzugsweise im Pyrolysebereich oder unterhalb des Pyrolysebereichs angeordnet ist, wobei die Primärluft der Vorrichtung (100) vorzugsweise von außen zugeführt wird.

10. Vorrichtung nach einem der vorhergehenden Ansprüche, **dadurch gekennzeichnet, dass** die Fördereinrichtung (230) einen schräg nach oben gerichteten zylinderförmigen Förderabschnitt (240) und eine Bogen (236) umfasst, an den sich das innere Hohlprofil (112) anschließt, wobei die Querschnittsfläche des zylinderförmigen Förderabschnittes (240) geringer als der Querschnitt des inneren Hohlprofils (112) ist, wobei insbesondere der Querschnitt des Bogens (236) an dessen Außenradiusseite vergrößert ist, wobei vorzugsweise mindestens eine Primärzuluftöffnung (117) oberhalb der Außenradiusseite des Bogens (236) angeordnet ist und wobei vorzugsweise oberhalb der Innenradiusseite des Bogens (236) keine Primärluftzuführöffnung angeordnet ist.

11. Vorrichtung nach einem der Ansprüche 1 bis 9, **dadurch gekennzeichnet, dass** die Fördereinrichtung (130) einen senkrecht nach oben gerichteten zylinderförmigen Förderabschnitt (132) umfasst, an den sich das innere Hohlprofil (112) anschließt, wobei mindestens zwei Primärluftzuführöffnungen (117) in vorzugsweise gleichen Winkelabständen umlaufend im inneren Hohlprofil (112) angeordnet sind.

12. Vorrichtung nach einem der vorhergehenden Ansprüche, **dadurch gekennzeichnet, dass** die Brennkammer (120) oberhalb der Reaktoranordnung (110) angeordnet ist, dass das bei der Verkohlung freiwerdende Gas zusammen mit der erzeugten Pflanzenkohle aus der oberen Öffnung der Reaktoranordnung (110) austritt und in die Brennkammer (120) eintritt.

13. Vorrichtung nach einem der vorhergehenden Ansprüche, **dadurch gekennzeichnet, dass** der Brennkammer (120) zur Verbrennung des beim Verkohlen freiwerdenden Gases Sekundärluft zuführbar ist, dass die Vorrichtung (100) vorzugsweise mindestens einen Sensor (164) umfasst, der mindestens einen Abgasparameter des aus der Brennkammer (120) austretenden Abgasstroms erfasst, wobei die Menge der zugeführten Sekundärluft einstellbar ist, vorzugsweise in Abhängigkeit des vom Sensor (164) ermittelten Werts des Abgasparameters.

14. Vorrichtung nach einem der vorhergehenden Ansprüche, **dadurch gekennzeichnet, dass** die Brennkammer einen insbesondere geraden Abschnitt mit einem rotationssymmetrischen Querschnitt hat, und/oder dass die Brennkammer (120) einen kegelförmigen rotationssymmetrischen Abschnitt hat, wobei der gerade Abschnitt vorzugsweise zwischen Reaktoranordnung (110) und dem kegelförmigen Abschnitt angeordnet ist, wobei die Seite des kegelförmigen Abschnitts mit dem größeren Querschnitt fest, vorzugsweise gasdicht, mit der der Reaktoranordnung (110) abgewandten Seite des geraden Abschnitts verbunden ist, und/oder wobei die Seite des kegelförmigen Abschnitts mit dem kleineren Querschnitt fest, vorzugsweise gasdicht, mit einer Abgasleitung (162) zum Ableiten des aus der Brennkammer (120) austretenden Abgasstroms verbunden ist.

15. Vorrichtung nach einem der vorhergehenden Ansprüche, **dadurch gekennzeichnet, dass** die Vorrichtung einen Temperatursensor (118) umfasst, der die Temperatur unterhalb eines Pyrolysebereichs der Reaktoranordnung (110) erfasst, und dass die Fördereinheit (130) den Biomassebrennstoff abhängig von der ermittelten Temperatur in die Reaktoranordnung (110) fördert.
